Europäisches Patentamt

European Patent Office

Office européen des brevets

(19)

(11) Numéro de publication: **0 158 227**

**A1**

(12) **DEMANDE DE BREVET EUROPEEN**

(21) Numéro de dépôt: 85103678.0

(22) Date de dépôt: 28.03.85

(51) Int. Cl.⁴: **H 02 K 5/132**

(30) Priorité: 02.04.84 FR 8405164

(43) Date de publication de la demande:
16.10.85 Bulletin 85/42

(84) Etats contractants désignés:
AT DE FR GB IT NL SE

(71) Demandeur: ALSTHOM-ATLANTIQUE Société anonyme dite:
38, Avenue Kléber
F-75784 Paris Cédex 16(FR)

(72) Inventeur: Mech, Christian
228 Parc de Cassan
F-95290 l'Isle Adam(FR)

(72) Inventeur: Gironde, Daniel
29 rue de Stalingrad
F-93310 Le Pré Saint Gervais(FR)

(74) Mandataire: Weinmiller, Jürgen et al,
Zeppelinstrasse 63
D-8000 München 80(DE)

(54) Dispositif d'accouplement pour moteurs électriques.

(57) Le dispositif est caractérisé par le fait que les carcasses tubulaires (4, 5) des moteurs (2, 3) à assembler ont une forme (8, 8a) propre à réaliser un emboîtement bout à bout réalisant un repérage angulaire, ladite forme étant identique sur les deux carcasses, et par le fait qu'il comporte un module interne d'accouplement (12) réalisant un sous-ensemble complet comportant un manchon d'accouplement (15) des arbres (16, 17) des rotors (62, 63), des moyens (29) de connexion électriques des stators (60, 61) et des moyens permettant d'assurer le rôle de palier radial (19,20) et de butée axiale (21, 22) pour les moteurs, l'extrémité de l'un (17) au moins des arbres (16, 17) ayant une section d'accouplement en forme de triangle équilatéral curviligne à sommets arrondis, ledit manchon ayant au moins une extrémité comportant un alésage correspondant, ladite extrémité du manchon et dudit arbre comportant en outre une forme d'entrée conjugée permettant la pénétration de l'arbre (17) dans le manchon quelle que soit leur position angulaire respective par un simple effort axial engendrant la rotation de l'une au moins des deux pièces de manière à les orienter correctement, le dispositif comportant en outre des moyens de liaison (11, 11a) entre le module (12) et les carcasses (4, 5).

FIG.5

## Dispositif d'accouplement pour moteurs électriques

La présente invention concerne un dispositif d'accouplement pour moteurs électriques.

Dans certaines applications telles que par exemple les puits de pétrole pompés, on utilise des motopompes immergées qui sont introduites à grande profondeur dans le trou de forage pour accroître le débit.

L'ensemble du matériel, c'est-à-dire la pompe et le moteur, doivent avoir un diamètre faible de manière à pouvoir être introduits dans le puits de forage et en conséquence, pour obtenir une puissance donnée, on est obligé d'agir sur la longueur puisque le diamètre est limité. Aussi, pour des questions de réalisation, on a été amené à construire le moteur en plusieurs tronçons que l'on accouple en nombre variable selon les besoins spécifiques de chaque cas de pompage.

L'invention a ainsi trait à un dispositif d'accouplement de deux moteurs électriques.

Le document FR-A2 525 305 décrit un tel dispositif d'accouplement de deux moteurs électriques, cependant, dans le dispositif tel que décrit, la cinématique de l'accouplement est la suivante : contact et accouplement des carcasses des deux moteurs à accoupler, puis accouplement des arbres et enfin accouplement des contacts électriques. Cette cinématique a l'avantage d'éviter que les pièces fragiles c'est-à-dire les contacts électriques et les cannelures des arbres ne soient accouplés les premiers, avec les risques de détérioration encourrus en cas de mauvaise manoeuvre ou de mauvais alignement. Cependant, cette cinématique implique que les arbres, qui sont donc en retrait par rapport à leur carcasse respective soient orientés convenablement par rapport à leur carcasse de manière à ce que la bonne orientation mutuelle des deux carcasses implique nécessairement la bonne orientation mutuelle des deux arbres pour leur accouplement. Le document cité ci-dessus décrit un moyen d'indexation des arbres par rapport aux carcasses, moyen qui s'escamote à la fin de l'accouplement, laissant libre la rotation des rotors en fin d'accouplement.

Un tel système prend de la place et comporte un certain nombre de petites pièces mobiles plus ou moins délicates.

La présente invention a pour but de simplifier le dispositif d'accouplement en supprimant le système 'd'indexation de l'arbre par rapport à la carcasse et permet d'utiliser la place ainsi libérée à d'autres fonctions.

L'invention a ainsi pour objet un dispositif d'accouplement pour moteurs électriques, lesdits moteurs comprenant chacun un rotor, et un stator monté dans une carcasse tubulaire, caractérisé en ce que les extrémités des carcasses tubulaires à assembler ont une forme propre à réaliser un emboîtement bout à bout constituant un repérage angulaire des carcasses, ladite forme étant identique sur les deux carcasses à assembler et en ce qu'il comporte un module interne d'accouplement constituant un sous-ensemble indépendant des moteurs proprement dit, ledit module comportant un manchon d'accouplement des arbres des rotors, des moyens de connexion électrique des stators et des moyens permettant d'assurer le rôle de palier radial et de butée axiale pour lesdits moteurs à assembler, l'extrémité de l'un au moins desdits arbres des rotors à accoupler en rotation ayant une section d'accouplement définie par la surface intérieure à une ligne fermée, non circulaire, de coordonnées polaires dont le rayon polaire a une périodicité égale à $\dfrac{2\pi}{n}$ , n étant un nombre entier positif supérieur à un, ledit manchon ayant au moins une extrémité comportant un alésage correspondant, ladite extrémité du manchon et dudit arbre comportant en outre respectivement une forme d'entrée conjuguée permettant la pénétration de l'arbre dans le manchon quelle que soit leur position angulaire respective, par un simple effort axial engendrant la rotation de l'une au moins des deux pièces de manière à orienter correctement les deux pièces l'une par rapport à l'autre, le dispositif comportant en outre des moyens de liaison entre le module interne d'accouplement et les carcasses.

De préférence, lesdits moyens de liaison entre le module et les carcasses comportent deux bagues dont la position axiale est limitée par deux butées entre lesquelles sont placées les bagues, lesdites bagues étant filetées sur leur pourtour externe et se vissant respectivement sur la paroi intérieure de l'extrémité de l'une et de l'autre des carcasses tubulaires à assembler, la paroi des tubes située entre les deux bagues comportant des fenêtres permettant le vissage des bagues.

Avantageusement, ladite section d'accouplement est un triangle équilatéral curviligne à sommets arrondis et ladite forme d'entrée conjuguée est constituée par des rampes hélicoïdales réalisées d'une part dans l'extrémité de l'alésage du manchon et d'autre part à l'extrémité de l'arbre.

Selon d'autres caractéristiques préférés d'une mise en oeuvre de l'invention, ledit module interne d'accouplement comprend ledit manchon d'accouplement entouré d'un corps en forme de manchon annulaire, ledit manchon d'accouplement étant libre en rotation à l'intérieur de deux paliers radiaux montés entre le manchon d'accouplement et le corps, ledit manchon d'accouplement étant maintenu axialement dans le corps par des patins de butée axiale, situés à chaque extrémité du manchon d'accouplement, lesdits patins étant maintenus par l'intermédiaire de flasques fixés aux extrémités du corps qui entoure le manchon, ledit corps du module étant traversé longitudinalement par des broches de connexion électriques pour la liaison électrique des stators des moteurs.

Le module interne d'accouplement est de préférence percé d'une pluralité de canaux longitudinaux débouchant à l'extérieur des flasques, répartis annulairement au niveau du corps, certains au moins de ces canaux étant munis à chacune de leurs extrémités d'un filtre, une gorge étant réalisée dans l'alésage dudit corps, entre les deux dits paliers radiaux, ladite gorge débouchant dans lesdits canaux longitudinaux, un trou radial étant percé, au droit de cette gorge dans le manchon d'accouplement, ce trou radial aboutissant dans l'alésage du manchon d'accouplement, l'ensemble du dispositif étant rempli d'huile.

L'invention sera bien comprise à la lumière de la description d'un exemple de réalisation faite ci-après en regard du dessin annexé dans lequel :

La figure 1 montre une vue schématique extérieure de trois moteurs accouplés.

La figure 2 montre en perspective l'extrémité face à face de deux carcasses de moteurs sans rien à l'intérieur.

La figure 3 est une vue partielle agrandie de la figure 1 centrée sur l'accouplement des carcasses.

La figure 4 est une vue partielle éclatée montrant l'extrémité de deux moteurs avant assemblage, le module interne d'accouplement étant déjà introduit dans l'extrémité de l'un des moteurs.

La figure 5 est une coupe axiale de l'ensemble du dispositif d'accouplement selon l'invention en position moteurs accouplés.

La figure 6 est une coupe selon VI-VI de la figure 5.

La figure 7 montre, vue en bout, l'extrémité supérieure du manchon d'accouplement de l'arbre du moteur supérieur.

La figure 8 est une coupe selon VIII-VIII de la figure 7.

La figure 9 montre, vue en bout, l'extrémité inférieure de l'arbre du moteur supérieur.

La figure 10 est vue selon F de la figure 9.

La figure 11 est une vue en coupe selon XI-XI de la figure 10.

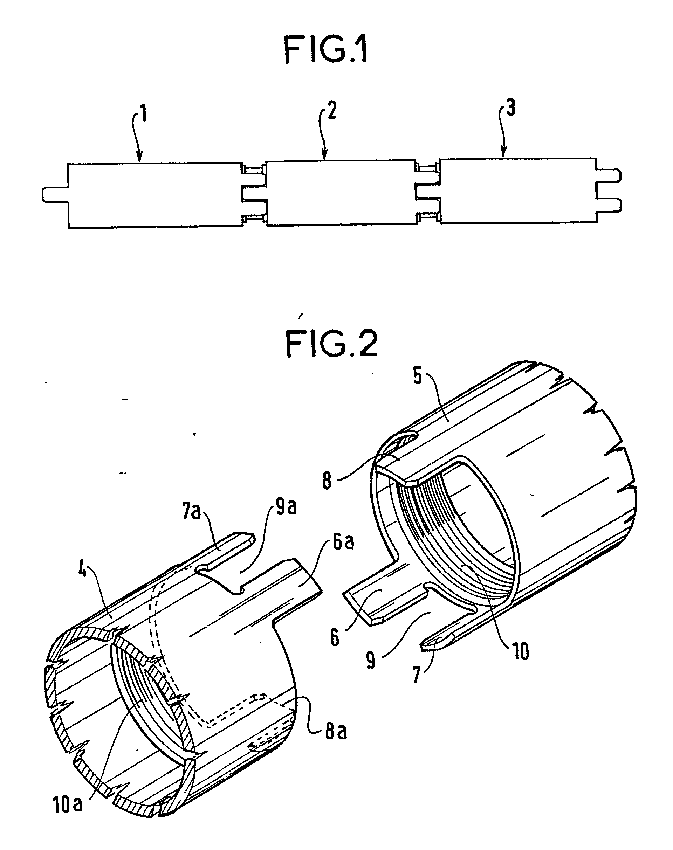

En se reportant à la figure 1 on voit trois moteurs 1, 2 et 3 accouplés. Il s'agit par exemple de l'ensemble moteur d'un groupe moto-pompe pour pompage de liquide dans des puits profonds.

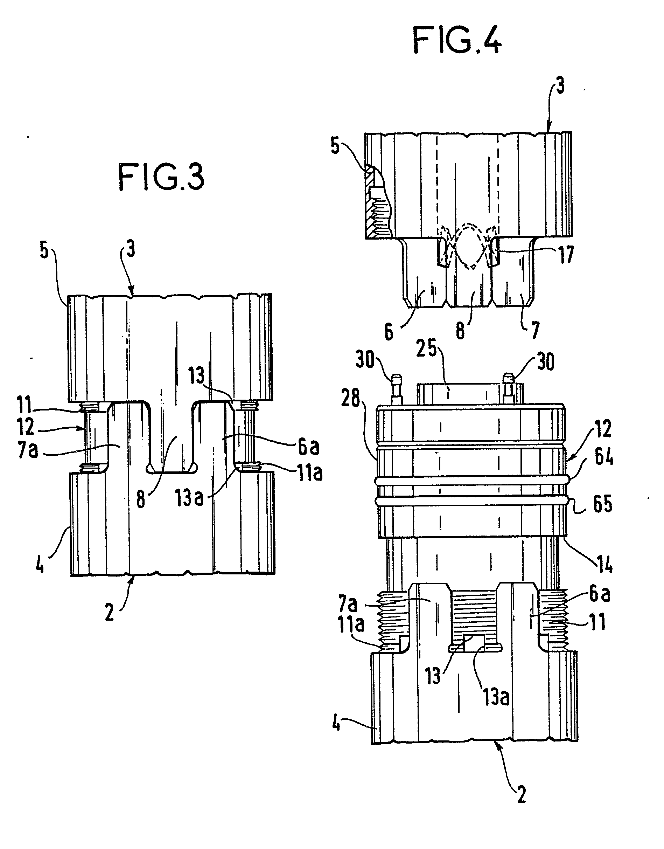

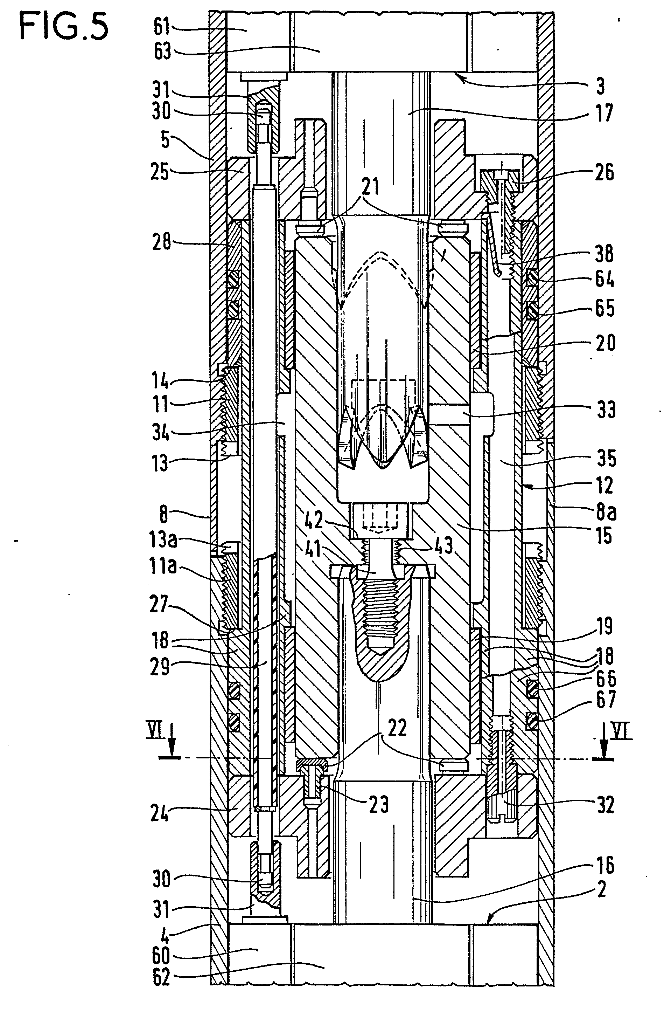

La figure 2 montre en perspective les dispositions prises sur l'extrémité de carcasses 4 et 5 de deux moteurs consécutifs tels que 2 et 3 pour l'assemblage de la partie statorique des moteurs. Cette figure 2 ne montre que l'extrémité des carcasses tubulaires des moteurs sans circuit magnétique ni enroulement, parties qui n'intéressent pas l'invention. Chaque extrémité de carcasse comporte un couple de languettes 6 et 7 et une languette isolée 8 plus éloignée angulairement. La disposition de ces languettes permet un repérage angulaire des carcasses c'est-à-dire des stators 60, 61 associés (figure 5). Sur la carcasse 4, ces languettes sont repérées 6a, 7a et 8a. L'espace 9 (ou 9a) entre le couple de languettes 6 et 7 (ou 6a et 7a) est égal à la largeur de la languette isolée 8 (ou 8a). Ainsi, lors de l'accouplement des stators, la languette 8 pénètre dans l'espace 9a et la languette 8a pénètre dans l'espace 9. Comme on peut le voir sur cette figure, les carcasses 4 et 5 sont taraudées, en 10 et 10a, sur une petite profondeur de leur extrémité. Ces taraudages servent à visser des écrous 11 et 11a (figures 3, 4, 5) montés sur un module interne d'accouplement 12 de façon à lier ensemble les deux carcasses 4 et 5 et le module d'accouplement 12.

La figure 3 montre les extrémités assemblées des deux moteurs 2 et 3. Cette vue montre qu'une fois assemblé, il existe, au droit de l'accouplement des carcasses 4 et 5 des fenêtres permettant l'accès aux écrous 11 et 11a et leur vissage. A cet effet, les écrous comportent des échancrures tels que 13, 13a.

Si l'on souhaite protéger l'accouplement, on peut prévoir de le recouvrir par une tôle s'appuyant sur chaque extrémité des carcasses 4 et 5 sur une portée de diamètre légèrement inférieure au diamètre des carcasses de manière à ce que le diamètre extérieur de la tôle arrive juste à fleur du diamètre des carcasses. Quelques vis peuvent permettre sa fixation. Un tel dispositif de protection, tout à fait banal, n'a pas été représenté sur les figures.

La figure 4 permet de voir à la partie inférieure de la figure l'extrémité supérieure du moteur 2 qui a déjà reçu son module intérieur d'accouplement 12, l'écrou 11a étant vissé et l'écrou 11 étant libre de coulisser jusqu'à un épaulement 14 du module 12. A la partie supérieure de la figure, on voit l'extrémité inférieure du moteur 3 prêt à descendre pour réaliser l'accouplement avec le moteur 2.

La figure 5 montre le détail en coupe axiale de l'ensemble du dispositif d'accouplement, en position accouplé des moteurs.

Dans cet ensemble le module interne d'accouplement 12, que l'on voit bien figure 4 mais dont on distingue moins bien l'ensemble sur la figure 5, compte tenu du fait que l'accouplement est complètement achevé, réalise plusieurs fonctions : accouplement des arbres moteurs, connexion électrique des deux stators, palier radial et butée axiale pour les rotors, filtrage de l'huile de lubrification des moteurs.

Ce module interne d'accouplement constitue un sous-ensemble complet indépendant des moteurs. Il comprend un manchon femelle 15 d'accouplement des arbres 16 et 17 des moteurs 2 et 3. Autour de ce manchon d'accouplement 15 est disposé le corps 18 du module interne, en forme de manchon annulaire. Ce corps 18 porte des emplacements pour recevoir des paliers radiaux 19 et 20.

Le manchon d'accouplement 15 tourne donc dans ces paliers 19 et 20 qui supportent ainsi les rotors 62, 63 des moteurs 2 et 3. Le corps 18 du module est d'autre part ajusté dans les carcasses 4 et 5, des joints d'étanchéité 64, 65, 66 et 67 assurent l'étanchéité entre l'intérieur des moteurs et l'extérieur.

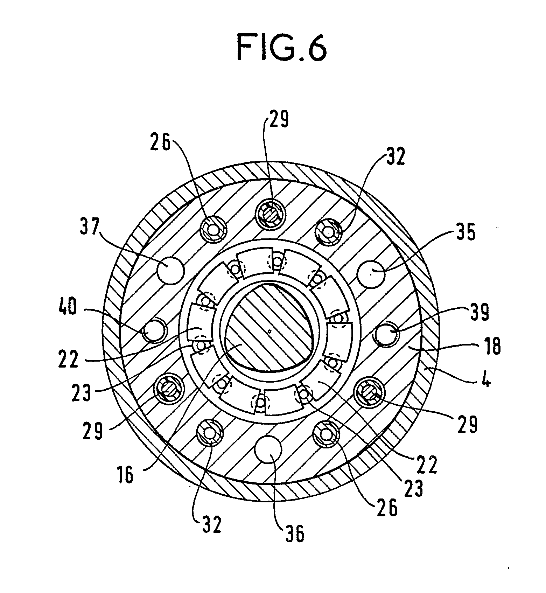

A chaque extrémité, le manchon femelle 15 d'accouplement est maintenu par des butées à patins : 21 à la partie supérieure et 22 à la partie inférieure. Ces patins sont maintenus en place par des pions 23 fixés, à l'extrémité inférieure, dans un flasque 24 et à l'extrémité supérieure dans un flasque 25. Ces flasques sont fixés au corps 18 par deux vis 26 disposées diamétralement. Sur la figure 6, on voit les deux vis 26 de fixation du flasque inférieur 24 au corps 18.

Comme on le voit sur la figure 5, les deux écroux 11 et 11a sont situés sur le module 12 autour du corps 18, sur une portée de celui-ci de diamètre inférieur au diamètre intérieur des carcasses tubulaires 4 et 5, portée qui est limitée par l'épaulement 14 à la partie supérieure et 27 à la partie inférieure. Comme on le voit sur la figure 5, l'épaulement supérieur 14 est réalisé par l'extrémité inférieure d'une bague 28 soudée sur le corps 18 après l'introduction des écrous 11 et 11a.

Le corps 18 du module 12 est traversé par trois broches 29 de manière à réaliser la connexion électrique des enroulements statoriques des deux moteurs 2 et 3. Ces broches se terminent chacune, à chaque extrémité, par un contact mâle 30.

La position relative des languettes 6, 7 et 8 (6a, 7a, 8a) d'assemblage des deux stators assurent la bonne position angulaire respective des stators et la coaxialité de chaque contact mâle 30 avec un contact femelle 31 correspondant porté par le stator du moteur correspondant.

A chaque extrémité, le corps 18 est muni de deux pions de centrage 32, disposés diamétralement, pour le centrage des flasques 24 et 25 sur le corps 18.

Enfin le module interne d'accouplement 12 est également utilisé pour réaliser un filtrage de l'huile dans laquelle baigne tout l'ensemble et les moteurs eux-mêmes.

A cet effet, le manchon d'accouplement 15 est percé d'un trou radial 33 aboutissant dans l'alésage supérieur du manchon 15 et situé en face d'une gorge 34 réalisée dans l'alésage du corps 18. Par ailleurs, cette gorge 34 débouche dans trois canaux axiaux 35, 36 et 37, percés dans le corps 18. A chaque extrémité de chacun de ces canaux, est monté un filtre tel que celui 38 dont on ne voit que la moitié sur la figure 5 en haut et à droite. Ces filtres sont serrés entre le flasque 24 (ou 25) et le corps 18.

En tournant, le trou radial·33 réalise en quelque sorte une pompe centrifuge et l'huile est aspirée le long de l'arbre 17, passe dans le trou 33, de là dans la gorge 34, puis dans les canaux axiaux 35, 36, 37 qui, grâce aux filtres 38 situés à chaque extrémité de chaque canal, jouent le rôle de bassins de décantation pour les impuretés contenues dans l'huile.

Cependant, outre ces trois trous axiaux 35, 36 et 37, le corps 18 est également percé de six autres canaux régulièrement répartis mais ne comportant pas de filtres, et les vis 26 de fixation des flasques sur le corps 18 ainsi que les pions de centrage 32 sont situés dans l'axe de quatre de ces canaux et sont eux-mêmes percés axialement. Les deux autres canaux repérés 39 et 40 sur la figure 6 sont taraudés à leurs extrémités et permettent de fixer les flasques 24 ou 25 sur le corps 18 sans se préoccuper de la position relative d'un trou de passage d'une broche de connexion électrique 29 par rapport à un autre. Ces six canaux axiaux supplémentaires permettent une circulation de l'huile. Il est bien évident que le trou radial 33 projette indifféremment l'huile dans ces six canaux aussi bien que dans les canaux 35, 35, 37 munis de filtres et jouant ainsi le rôle de bassin de décantation. Mais à la longue, toute l'huile passera à un moment ou à un autre dans ces bassins et sera donc filtrée.

Le module intérieur de connexion 12 est ainsi un ensemble complet que l'on introduit d'abord dans l'extrémité supérieure d'un moteur tel que 2. Une fois introduit, on lie axialement l'arbre moteur 16 au manchon d'accouplement en rotation 15, au moyen d'une vis 41 à tête creuse qui prend appui contre la paroi 42 de séparation des alésages recevant respectivement l'arbre 16 et l'arbre 17. De manière à ne pas perdre la vis 41 lors du démontage, le trou 43 de passage de la vis dans la paroi 42 est taraudé de telle sorte que la vis une fois dégagée de l'extrémité de l'arbre 16 reste liée au module 12. Une fois vissée la vis 41, on visse l'écrou 11a à la carcasse 4. On se trouve ainsi dans la position représentée figure 4. Il n'y a plus alors qu'à descendre le moteur 3 en ne se préoccupant que de la position respective des carcasses 4 et 5, ceci étant aisé grâce aux languettes 6, 7, 8, 6a, 7a, 8a.

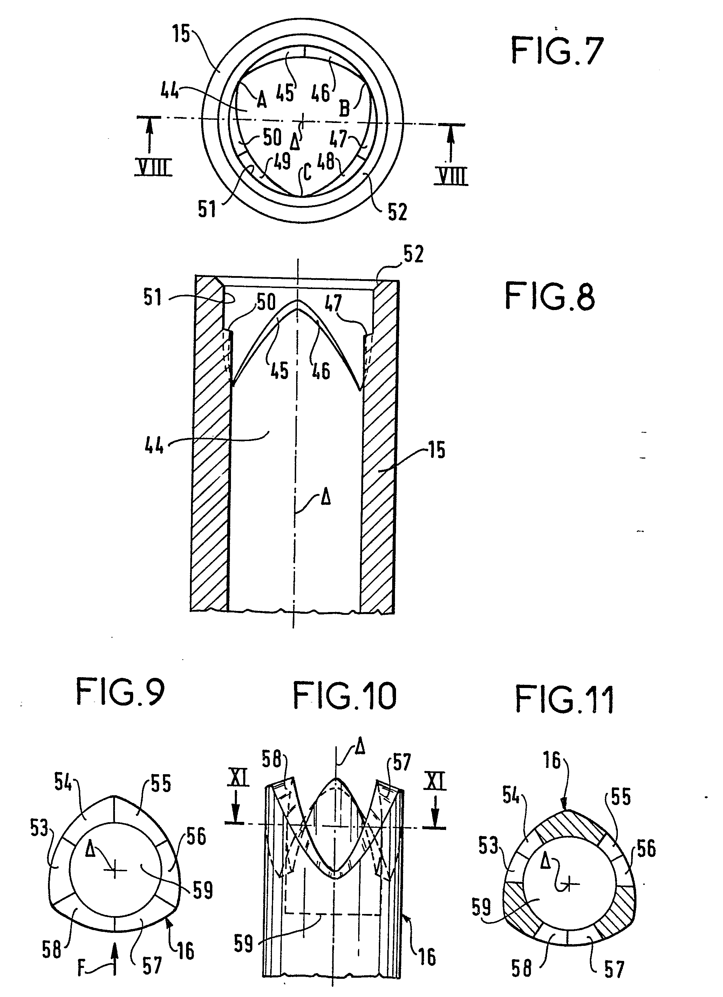

La pénétration de l'extrémité de l'arbre 17 dans l'alésage supérieur du manchon d'accouplement 15 est réalisée sans difficulté, même si la position angulaire respective de l'arbre et du manchon n'est pas bonne : le simple effort axial d'appui de l'extrémité de l'arbre 17 dans l'entrée de l'alésage du manchon 15 transforme cet effort en un effort tangentiel entraînant la rotation de l'arbre et/ou du manchon, si l'orientation respective n'est pas bonne, ceci grâce à un système de rampes hélicoïdales décrites ci-après en référence aux figures 7 à 11. Une fois le moteur 3 descendu jusqu'au contact des languettes contre l'extrémité des carcasses, il ne reste plus qu'à visser l'écrou 11 dans la carcasse 5. Comme le montre la figure 5, les butées axiales 21, 22 fixent axialement l'extrémité supérieure du rotor du moteur inférieur 2 tandis que l'extrémité inférieure, non visible sur cette figure, du moteur 2 est libre, permettant une certaine dilatation axiale du moteur. Sur la figure, cette liberté de dilatation axiale est visible pour l'extrémité inférieure du moteur 3. En effet on voit que l'extrémité de l'arbre 17 du rotor peut s'enfoncer plus profondément dans l'alésage du manchon 15.

On va maintenant décrire, en référence aux figures 7 à 11, les moyens permettant de s'affranchir d'une bonne orientation relative du manchon 15 et de l'arbre 17 au moment de l'accouplement. Ces moyens peuvent naturellement se retrouver pour l'accouplement entre l'arbre 16 et le manchon 15, cependant ici cela n'est pas indispensable car lors de cet accouplement il n'y a que le module 12 à accoupler, ce module 12 étant évidemment beaucoup plus maniable, de par son poids et son volume, que le moteur 3 entier qui peut être très long jusqu'à 8 à 9 mètres. On peut donc là, orienter convenablement le manchon 15 avant l'introduction du module 12 dans le moteur 2, tandis que lors de la descente du moteur supérieur 3 sur le moteur inférieur 2 il faut éviter toute manipulation à l'intérieur du périmètre extérieur des moteurs et entre ceux-ci, de peur qu'une manoeuvre intempestive du grutier ne vienne écraser la main du manipulateur.

La figure 7 montre donc en vue de dessus l'extrémité supérieure du manchon 15 et la figure 8 est une coupe axiale selon VIII-VIII de la figure 7.

Ces figures montrent que le manchon 15 est percé d'un alésage 44 en forme de triangle équilatéral curviligne à sommets A, B, C arrondis. L'entrée de cet alésage comporte une forme d'entrée constituée par six rampes hélicoïdales 45 à 50 comprises entre le cylindre de section correspondant à la section 44 d'accouplement et le tube de section intérieure circulaire dont la circonférence 51 est circonscrite à cette section 44. Ces rampes sont alternativement pas à droite, pas à gauche. Les rampes hélicoïdales sont générées par un rayon polaire faisant un angle $\theta$ par rapport au plan perpendiculaire à l'axe $\Delta$, par exemple 15°.

Cet angle permet d'améliorer le centrage au moment de l'accouplement. Cette inclinaison se manifeste sur la figure 8 par la distance qui sépare, sur l'axe $\Delta$, les deux courbes délimitant les bords de la rampe 45, ou 46. Un chanfrein 52 est aménagé à l'entrée de l'alésage.

Les figures 9, 10 et 11 représentent l'extrémité de l'arbre 16. La figure 11 étant une coupe selon XI-XI de la figure 10.

La section définitive d'accouplement, voir figure 9, est un triangle équilatéral curviligne à sommets arrondis correspondant, au jeu de l'ajustage près, à la section 44. La partie supérieure de l'extrémité de l'arbre 16 comporte six rampes hélicoïdales de positionnement 53 à 58. Ces rampes sont réalisées entre un tube dont la section intérieure correspond à la forme finale d'accouplement : un triangle équilatéral curviligne à sommets arrondis, et un cylindre de section circulaire dont le diamètre est inférieur au cercle inscrit dans ladite forme d'accouplement. En outre, l'extrémité est percée d'un trou cylindrique 59 dont le diamètre correspond audit cylindre. Ce trou a pour but de permettre d'usiner plus facilement les rampes hélicoïdales et assure en outre une certaine souplesse aux "dents" constituées par ces rampes. La profondeur du trou 49 est au moins égale à la hauteur des rampes.

Comme pour le manchon 15, les rampes hélicoïdales sont générées par un rayon polaire incliné d'un angle $\theta$ d'environ 15° par rapport au plan perpendiculaire à l'axe $\Delta$ d'accouplement.

Sur la figure 5, la forme d'entrée de l'extrémité de l'arbre 17 du rotor 63, forme d'entrée comportant les rampes 53 à 58 et le trou 59, est réalisée dans l'arbre même du rotor. Bien évidemment cette forme d'entrée peut être rapportée et vissée à l'extrémité de l'arbre.

Comme on le remarque sur la figure 7, on a réalisé deux rampes hélicoïdales par exemple 47 et 48 entre deux sommets consécutifs de la section d'accouplement, ici, pour les rampes 47 et 48 il s'agit des sommets B et C. Comme on l'a dit plus haut, deux rampes consécutives ont un pas inverse. Cette disposition permet de faire en sorte que l'accouplement puisse se faire, selon la position respective des pièces au moment de leur approche, par rotation dans un sens ou dans l'autre. Cela permet de diminuer l'angle de rotation à effectuer par rapport au cas où il n'y aurait qu'une seule rampe hélicoïdale d'un sommet à l'autre de la section d'accouplement. Les rampes ayant alors toutes leur pas dans le même sens.

Bien entendu, sur la pièce mâle (arbre 16) il faut mettre entre deux sommets consécutifs de la section d'accouplement deux rampes hélicoïdales si il y en a deux sur le manchon d'accouplement et une seule dans le cas contraire.

REVENDICATIONS

1/ Dispositif d'accouplement pour moteurs électriques, lesdits moteurs comprenant chacun un rotor (62, 63) et un stator (60, 61) monté dans une carcasse tubulaire (4, 5), caractérisé en ce que les extrémités des carcasses tubulaires à assembler ont une forme (6, 7, 8, 6a, 7a, 8a) propre à réaliser un emboîtement bout à bout constituant un repérage angulaire des carcasses, ladite forme étant identique sur les deux carcasses à assembler et en ce qu'il comporte un module interne d'accouplement (12) constituant un sous-ensemble indépendant des moteurs proprement dits, ledit module comportant un manchon d'accouplement (15) des arbres (16, 17) des rotors, des moyens (29) de connexion électriques des stators et des moyens permettant d'assurer le rôle de palier radial (19, 20) et de butée axiale (21, 22) pour lesdits moteurs à assembler, l'extrémité de l'un (17) au moins desdits arbres des rotors à accoupler en rotation ayant une section d'accouplement définie par la surface intérieure à une ligne fermée, non circulaire, de coordonnées polaires dont le rayon polaire a une périodicité égale à $\frac{2\pi}{n}$ , n étant un nombre entier positif supérieur à un, ledit manchon (15) ayant au moins une extrémité comportant un alésage correspondant, ladite extrémité du manchon et dudit arbre comportant en outre, respectivement, une forme d'entrée conjuguée permettant la pénétration de l'arbre dans le manchon quelle que soit leur position angulaire respective, par un simple effort axial engendrant la rotation de l'une au moins des deux pièces de manière à orienter correctement les deux pièces l'une par rapport à l'autre, le dispositif comportant en outre des moyens de liaison (11, 11a) entre le module interne d'accouplement et les carcasses.

2/ Dispositif d'accouplement pour moteurs électriques selon la revendication 1, caractérisé en ce que lesdits moyens de liaison entre le module et les carcasses comportent deux bagues (11, 11a) montées sur le module et dont la position axiale est limitée par deux butées (14, 27) entre lesquelles sont placées les bagues, lesdites bagues étant filetées sur leur pourtour externe et se vissant respectivement sur la paroi intérieure de l'extrémité de l'une (5) et de l'autre (4) des carcasses tubulaires à assembler, la paroi des tubes située entre les deux bagues comportant des fenêtres permettant le vissage des bagues.

3/ Dispositif d'accouplement pour moteurs électriques selon l'une des revendications 1 ou 2, caractérisé en ce que ladite section d'accouplement est un triangle équilatéral curviligne à sommets arrondis (44) et en ce que ladite forme d'entrée conjuguée est constituée par des rampes hélicoïdales réalisées d'une part (45 à 50) dans l'extrémité de l'alésage du manchon (15) et d'autre part (53 à 58) à l'extrémité de l'arbre (17).

4/ Dispositif d'accouplement pour moteurs électriques selon l'une des revendications 1 à 3, caractérisé en ce que ledit module interne d'accouplement (12) comprend ledit manchon d'accouplement (15) entouré d'un corps (18) en forme de manchon annulaire, ledit manchon d'accouplement étant libre en rotation à l'intérieur de deux paliers radiaux (19, 20) montés entre le manchon d'accouplement et le corps, ledit manchon d'accouplement étant maintenu axialement dans le corps par des patins (21, 22) de butée axiale, situés à chaque extrémité du manchon d'accouplement, lesdits patins étant maintenus par l'intermédiaire de flasques (24, 25) fixés aux extrémités du corps (18) qui entoure le manchon, ledit corps du module étant traversé longitudinalement par des broches (29) de connexion électriques pour la liaison électrique des stators (60, 61) des moteurs.

5/ Dispositif d'accouplement pour moteurs électriques selon la revendication 4, caractérisé en ce que ledit module est percé d'une pluralité de canaux longitudinaux (35, 36, 37, 39, 40) débouchant à l'extérieur des flasques, répartis annulairement au niveau du corps, certains (35, 36, 37) au moins de ces canaux étant munis à chacune de leurs extrémités d'un filtre (38), une gorge (34) étant réalisée dans l'alésage dudit corps, entre les deux dits paliers radiaux (19, 20), ladite gorge (34) débouchant dans lesdits canaux longitudinaux, un trou radial (33) étant percé, au droit de cette gorge dans le manchon d'accouplement (15), ce trou radial aboutissant dans l'alésage du manchon d'accouplement, l'ensemble du dispositif étant rempli d'huile.

1/5

0158227

# FIG.1

# FIG.2

FIG.4

FIG.3

0158227

FIG.5

# FIG.6

5 / 5

0158227

FIG.7

FIG.8

FIG.9

FIG.10

FIG.11

Office européen
des brevets

**RAPPORT DE RECHERCHE EUROPEENNE**

**0158227**
Numéro de la demande

EP 85 10 3678

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | US-A-3 384 769 (SCHAEFER)<br>* Colonne 18, ligne 72 - colonne 20, ligne 38; figures 1,16 * | 1,4 | H 02 K 5/132 |
| A | FR-A-1 417 976 (INSTITUT FRANCAIS)<br>* Page 2, colonne de droite, ligne 40 - page 3, colonne de droite, ligne 14; figures 1-4 * | 1,4 | |
| A | FR-A- 941 735 (BENDIX)<br>* Page 4, ligne 21 - page 5, ligne 19; figures 1-4 * | 1 | |
| A | FR-A-2 356 046 (SOCIETE GENERALE)<br>* Page 5, lignes 2-21; figures 1-6 * | 1 | |
| A | US-A-3 213 719 (KLOACK)<br>* Colonne 4, lignes 24-37; figures 1-7 * | 3 | **DOMAINES TECHNIQUES RECHERCHES (Int. Cl.4)**<br><br>H 02 K<br>F 16 D |
| A | US-A-2 240 569 (MYERS)<br>* Page 3, colonne de gauche, lignes 10-32; figure 4 * | 4 | |
| A | US-A-4 350 911 (WILSON et al.)<br>* Colonne 5, lignes 19-24; figures 1A,1B * | 5 | |
| | --- -/- | | |

Le présent rapport de recherche a été établi pour toutes les revendications

| Lieu de la recherche | Date d'achèvement de la recherche | Examinateur |
|---|---|---|
| LA HAYE | 21-06-1985 | TIO K.H. |

**0158227**
Numéro de la demande

**RAPPORT DE RECHERCHE EUROPEENNE**

Office européen
des brevets

EP 85 10 3678

| | DOCUMENTS CONSIDERES COMME PERTINENTS | | Page 2 |
|---|---|---|---|

| Catégorie | Citation du document avec indication, en cas de besoin, des parties pertinentes | Revendication concernée | CLASSEMENT DE LA DEMANDE (Int. Cl.4) |
|---|---|---|---|
| A | US-A-2 098 958 (EKSTROMER)<br><br>----- | 1,2 | |
| | | | DOMAINES TECHNIQUES RECHERCHES (Int. Cl.4) |

Le présent rapport de recherche a été établi pour toutes les revendications

| Lieu de la recherche | Date d'achèvement de la recherche | Examinateur |
|---|---|---|
| LA HAYE | 21-06-1985 | TIO K.H. |